# EUROPEAN PATENT APPLICATION

(11) **EP 4 524 010 A1**
(43) Date of publication of application: **19.03.2025**
(21) Application number: 24187998.0
(22) Date of filing: 11.07.2024
(51) Int. Cl.: B62J 45/00, B62J 45/42, B62J 50/21, B62J 6/00, B62J 6/22, B62J 6/26, B62J 1/00, B62J 3/14, B62J 50/22

(54) **SADDLE WITH RADAR DEVICE FOR DETECTING NEARBY OBJECTS AND CAUSING WARNINGS**

(30) Priority: 18.09.2023 TW 112210057 U
(71) Applicant: Oxo Pro Pte. Ltd., Singapur 038989 (SG)
(72) Inventor: WOH, Mike, 038989 Singapore (SG)
(74) Representative: Canzler & Bergmeier Patentanwälte Partnerschaft mbB

(57) **Abstract**

A radar detection and warning device (3) includes a left object detection component (4) and a right object detection component (5), which is combined with a saddle (2). A control unit (34) is electrically connected to the left object detection component (4) and the right object detection component (5). The control unit (34) generates a driving signal to a warning device (6) to generate a warning when receiving a warning signal from the left object detection component (4) and/or the right object detection component (5). The radar detection and warning device (3) also includes a left warning light (71) and a right warning light (72) for further warning purposes.

## Description

### BACKGROUND OF THE INVENTION

### 1. Field of the Invention

The present invention relates to a saddle with warning functions, and in particular to a saddle with a radar device for detecting nearby objects and causing warnings.

### 2. The Related Arts

Bicycles can be used as a transportation, and they can also be used as sports equipment during holidays. Various equipment or accessories for bicycles have been developed.

Among the available safety equipment or accessories of bicycles, in order to improve the safety of riders while riding bicycles, it is known that various warning lights adapted to be install on the bicycles are available in the market. Some such products are designed for riders to wear on their bodies or heads. However, these warning lights usually only focus on changes in light sources and different configuration positions. There is still room for improvement in driving safety for riders.

In particular, when a user is riding a bicycle, the user can often only pay attention to changes in conditions in front of the bicycle, but cannot pay attention to conditions behind the bicycle. Further, when a user rides a bicycle at night, due to insufficient light and the user's inability to pay attention to changes in the surrounding environment, accidents can easily occur due to momentary negligence.

### SUMMARY OF THE INVENTION

An objective of the present invention is to provide a saddle with a radar device, in order to provide cyclists with higher safety when riding bicycles to avoid traffic accidents.

To achieve the above objective, the present invention provides a radar device includes a left object detection component and a right object detection component, which is combined with the saddle. A control unit is electrically connected to the left object detection component and the right object detection component. The control unit generates a driving signal to a warning device to generate a warning when receiving the warning signal from the left object detection component, and the control unit generates a driving signal to the warning device to generate a warning when receiving the warning signal from the right object detection component. The radar device also includes a left warning light and a right warning light for warning purposes.

In respect of efficacy, the bicycle rider can know the situation behind, side or in the selected direction at any time when riding the bicycle. When any objects (such as human bodies, cars, objects, obstacles) are detected by the present invention in the direction or in the selected direction, timely warnings can be caused to avoid traffic accidents. Especially when the bicycle is traveling in places such as tunnels or in dark weather, it can increase the safety of the rider.

The present invention can also include a left warning light and a right warning light, which can be arranged on the left or right position of one of the saddles, handlebars, and brackets of the bicycle.

### BRIEF DESCRIPTION OF THE DRAWINGS

Fig. 1 is a schematic side view showing a radar detection and warning device of the present invention is combined with a bicycle saddle;
Fig. 2 is a rear perspective exploded view showing a radar detection and warning device of the present invention is mounted onto the bicycle saddle;
Fig. 3 is a control circuit diagram of the present invention;
Fig. 4 is top plane view showing an object on a left side of the bicycle is detected by the present invention; and
Fig. 5 is top plane view showing an object on a right side of the bicycle is detected by the present invention.

### DETAILED DESCRIPTION OF THE PREFERRED EMBODIMENTS

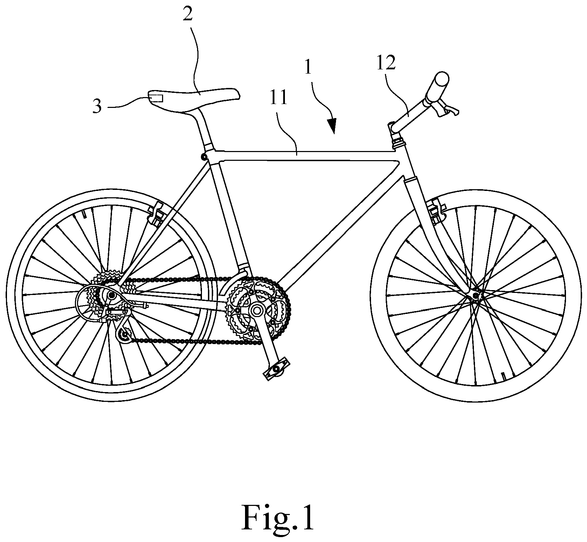

Fig. 1 shows a radar detection and warning device 3 of the present invention is combined with a saddle 2 of a bicycle 1. When a rider is riding the bicycle 1, the radar detection and warning device 3 is capable of detecting nearby objects around the bicycle 1 and timely generating warnings to improve the rider's driving safety.

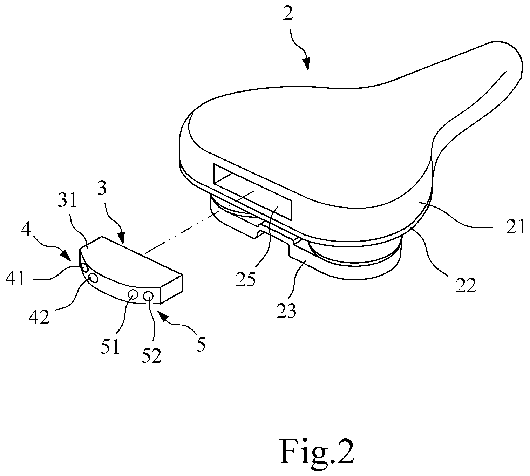

As shown in Fig. 2, the saddle 2 is composed of a saddle body 21 and a base plate 22. The saddle 2 is combined with an upright pole of the bicycle 1 by the base plate 22, a support base 23 and known assembly components (not shown).

The radar detection and warning device 3 can be made into a modular structure, that is, it includes a module housing 31 that can be combined with a rear end surface of the saddle body 21. Preferably, the module housing 31 is placed in a mounting space 25 defined by the saddle body 21 or combined with the base plate 22 or the support base 23 of the saddle 2.

The rear edge of the module housing 31 is equipped with at least one object detection component for detecting nearby objects (such as human bodies, cars, articles, obstacles) in a predetermined detecting range at the rear. For example, a left object detection component 4 is disposed on a left position of the module housing 31, which includes a radar wave transmitter 41 and a corresponding radar wave receiver 42. A right object detection component 5 is disposed on a right position of the module housing 31, which includes a radar wave transmitter 51 and a corresponding radar wave receiver 52.

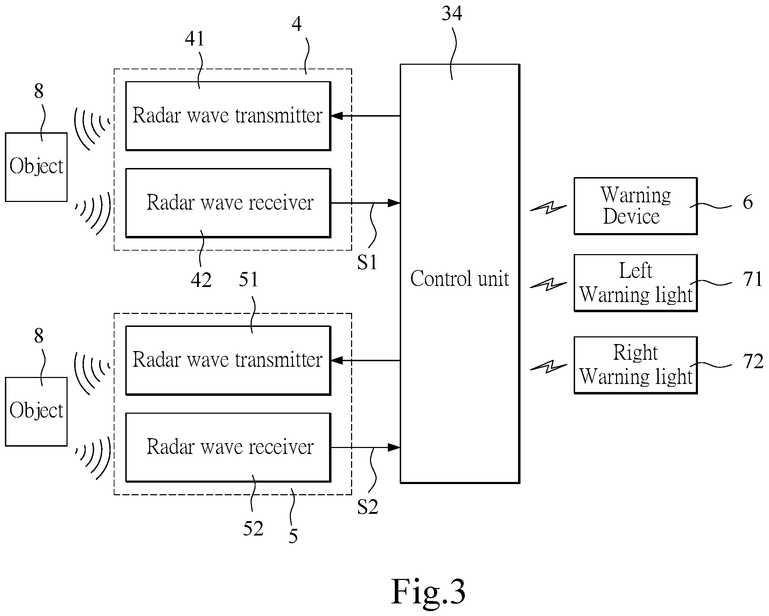

Figure 3 shows a control circuit diagram of a preferred embodiment of the present invention, which includes a control unit 34, a left object detection component 4, a right object detection component 5, and a warning device 6. Preferably, a left warning light 71 and a right warning light 72 are connect to the control unit 34. The left warning light 71 can be disposed on a left side of the saddle or other locations on the bicycle (for example, the left end of a handlebar or a left side of the bracket of the bicycle 1. The right warning light 72 can be disposed on a right side of the saddle or other locations on the bicycle (for example, the right end of a handlebar or a right side of the bracket of the bicycle 1.

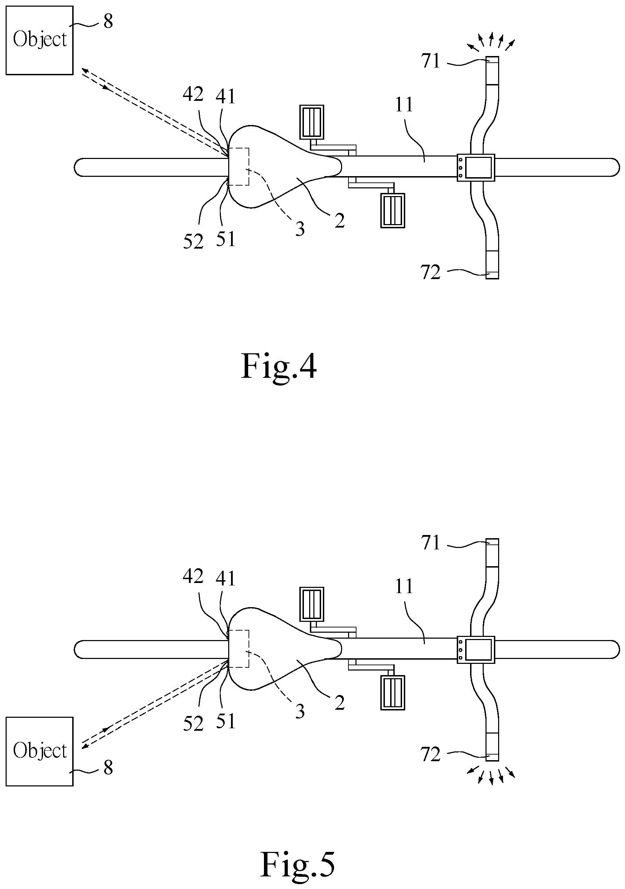

Referring to FIG. 4, when a rider is riding the bicycle 1, the radar wave transmitter 41 can emit radar waves in a projection direction. When an object 8 exists within a predetermined detecting range, a left-side echo signal is reflected by the object 8. The radar wave receiver 42 can receive the left-side echo signal and transmit a warning signal S1 to the control unit 34. The control unit 34 then sends a driving signal to a warning device 6 to generate a warning when receiving the warning signal S1. At the same time, the control unit 34 can also drive the left warning light 71 to generate a visible light. The control unit 34 can be designed to transmit the driving signal to the warning device 6 and the left warning light 71 through wired, wireless or Bluetooth transmission interface.

Referring to FIG. 5, when a rider is riding the bicycle 1, the radar wave transmitter 51 can emit radar waves in a projection direction. When an object 8 exists within a predetermined detecting range, a right-side echo signal is reflected by the object 8. The radar wave receiver 52 can receive the right-side echo signal and transmit a warning signal S2 to the control unit 34. The control unit 34 then sends a driving signal to the warning device 6 to generate a warning when receiving the warning signal S2. At the same time, the control unit 34 can also drive the right warning light 72 to generate a visible light. The control unit 34 can be designed to transmit the driving signal to the warning device 6 and the right warning light 72 through wired, wireless or Bluetooth transmission interface.

In the aforementioned embodiments, the radar detection and warning device 3 is combined with the saddle of a bicycle as an embodiment. In practical applications, the radar detection and warning device 3 can also be combined on the front, left or right side of one of the handlebars or brackets of the bicycle.

Further, the foregoing embodiment is combined with a bicycle seat as an example for description and illustration. In practical applications, this invention can also be applied to such as electric bicycles, electric mobility scooters, electric scooters, electric assisted bicycles, shopping carts, etc.

### List of Reference Signs:

1 : bicycle
2 : saddle
21 : saddle body
22 : base plate
23 : support base
25 : mounting space
3 : radar detection and warning device
31 : module housing
34 : control unit
4 : left object detection component
41 : radar wave transmitter
42 : radar wave receiver
5 : right object detection component
51 : radar wave transmitter
52 : radar wave receiver
6 : warning device
71 : left warning light
72 : right warning light
8 : object

## Claims

1. A saddle with a radar device for detecting nearby objects and causing warnings, the radar device being arranged in a mounting space defined by the saddle, **characterized in that**:
a left object detection component, located at a left position of the saddle, including:
a radar wave transmitter for emitting radar waves in a left projection direction, a left-side echo signal being reflected by objects existed within a predetermined detecting range of the left projection direction;
a radar wave receiver for generating a warning signal when receiving the left-side echo signal;
a right object detection component, located at a right position of the saddle, including:
a radar wave transmitter for emitting radar waves in a right projection direction, a right-side echo signal being reflected by objects existed within a predetermined detecting range of the right projection direction;
a radar wave receiver for generating the warning signal when receiving the right-side echo signal; and
a control unit electrically connected to the left object detection component and the right object detection component;
wherein the control unit sends a driving signal to a warning device to generate a warning when receiving the warning signal from the left object detection component and/or the right object detection component.

2. The saddle as defined in claim 1, **characterized in that** the control unit transmits the driving signal to the warning device through one of wired, wireless or Bluetooth transmission interface.

3. The saddle as defined in claim 1, **characterized in that**:
a left warning light configured on a left side of one of the saddle, a handlebar, a bracket of a bicycle, the control unit generating a left driving signal to drive the left warning light when receiving the warning signal from the left object detection component; and
a right warning light configured on a right side of one of the saddle, a handlebar, a bracket of the bicycle, the control unit generating a right driving signal to drive the right warning light when receiving the warning signal from the right object detection component.

4. The saddle as defined in claim 3, **characterized in that** the control unit transmits the left driving signal to the left warning light and transmits the right driving signal to the right warning light through one of wired, wireless or Bluetooth transmission interface.

5. A saddle with a radar device for detecting nearby objects and causing warnings, the radar device being arranged in a mounting space defined by the saddle, **characterized in that**:
at least one object detection component, located at a position of the saddle, including:
a radar wave transmitter for emitting radar waves in a projection direction, an echo signal being reflected by objects existed within a predetermined detecting range of the projection direction;
a radar wave receiver for generating a warning signal when receiving the echo signal;
a control unit electrically connected to the radar wave transmitter and the radar wave receiver; and
a warning device electrically connected to the control unit;
wherein the control unit generates a driving signal to the warning device to generate a warning including one of warning sound and warning light when receiving the warning signal from the at least one object detection component.

6. The saddle as defined in claim 5, **characterized in that** the control unit transmits the driving signal to the warning device through one of wired, wireless or Bluetooth transmission interface.

7. The saddle as defined in claim 5, **characterized in that**:
a left warning light configured on a left side of one of the saddle, a handlebar, a bracket of a bicycle, the control unit generating a left driving signal to drive the left warning light when receiving the warning signal from the at least one object detection component; and
a right warning light configured on a right side of one of the saddle, a handlebar, a bracket of the bicycle, the control unit generating a right driving signal to drive the right warning light when receiving the warning signal from the at least one object detection component.

8. The saddle as defined in claim 7, **characterized in that** the control unit transmits the left driving signal to the left warning light and transmits the right driving signal to the right warning light through one of wired, wireless or Bluetooth transmission interface.
